## Europäisches Patentamt

## European Patent Office

## Office européen des brevets

(19)

(11) Numéro de publication: **0 069 004**

**B1**

(12)

# FASCICULE DE BREVET EUROPÉEN

(45) Date de publication du fascicule du brevet: **15.10.86**

(51) Int. Cl.⁴: **H 01 M 4/62**, H 01 M 4/06, H 01 M 6/06

(21) Numéro de dépôt: **82401134.0**

(22) Date de dépôt: **21.06.82**

(54) **Perfectionnement aux mélanges cathodiques de piles sèches au bioxyde de manganèse-zinc à électrolyte salin.**

(30) Priorité: **26.06.81 FR 8112690**
**23.12.81 FR 8124154**

(43) Date de publication de la demande:
**05.01.83 Bulletin 83/1**

(45) Mention de la délivrance du brevet:
**15.10.86 Bulletin 86/42**

(84) Etats contractants désignés:
**AT BE CH DE FR GB IT LI LU NL SE**

(56) Documents cité:
**FR-A-2 379 915**
**FR-A-2 383 215**
**NL-A-6 610 532**
**US-A-3 060 256**
**US-A-3 414 440**
**US-E-30 458**

**ELECTROCHEMICAL TECHNOLOGY, vol.5, no.11-12, novembre/décembre 1967 M. BREGAZZI: "Acetylene black", pages 507-513**
**PATENTS ABSTRACTS OF JAPAN, vol.4, no.79, 7 juin 1980, page 47 E 14**

**Le dossier contient des informations techniques présentées postérieurement au dépôt de la demande et ne figurant pas dans le présent fascicule.**

(73) Titulaire: **SOCIETE LES PILES WONDER, 77, rue des Rosiers, F-93406 Saint- Ouen (FR)**

(72) Inventeur: **Meunier, Jean- Paul, 50, rue Victor Renelle, F-92340 Stains (FR)**
Inventeur: **Garcin, Maurice, 9, rue de la Moselle, F-75019 Paris (FR)**

(74) Mandataire: **Kedinger, Jean- Paul, c/o Cabinet Malemont 42, avenue du Président Wilson, F-75116 Paris (FR)**

## Description

La présente invention se rapporte à un élément électrochimique, élément de pile sèche cylindrique du couple bioxyde de manganèse-zinc dont la cathode est constituée d'un mélange comprenant essentiellement du bioxyde de manganèse synthétique ou naturellement actif et du noir de carbone spécifique, mélange dans lequel est absorbé un électrolyte (A) formé d'une solution saline composée principalement d'eau, de chlorure de zinc et de chlorure d'ammonium ou un électrolyte (B) pour élément de pile dite au chlorure de zinc formé d'une solution saline composée principalement d'eau, de chlorure de zinc et éventuellement de chlorure d'ammonium à une teneur inférieure à 3 % en poids dudit mélange.

D'après Electrochemical Technology, vol. 5, No 11-12, novembre/décembre 1967, pages 507-513, on connaît déjà des piles de ce type, ce document précisant que le noir de carbone mis en oeuvre dans ces piles présentera avantageusement une faible résistivité et une bonne capacité à retenir l'électrolyte.

De telles piles sèches sont connues également d'après US-Reissue 30 458, qui stipule entre autres que le rapport $MnO_2$/noir de carbone devra avantageusement ne pas dépasser 7.

On connaît enfin d'après US-A-3 414 440, des piles sèches du type $MnO_2$-Zn dans lesquels $MnO_2$ est constitué par une variété particulière de bioxyde de manganèse $\gamma$ chimique, le rapport $MnO_2$ $\gamma$/noir de carbone du mélange cathodique de ces piles ne dépassant pas 10.

La présente invention a pour but notamment améliorer la sans en modifier la technique de réalisation et sans en augmenter le coût global des composants; pour ce faire, l'invention porte sur une modification de la composition centésimale du mélange cathodiquésusceptible d'accroître la durée de décharge de la pile, cette modification n'entraînant pas de surcoût du mélange ou s'accompagnant même d'une baisse du coût de ce mélange.

La capacité d'une pile sèche, et donc sa durée de décharge, est en première approximation, dans les conditions les plus courantes d'utilisation, proportionnelle à la quantité de bioxyde de manganèse contenue dans la cathode. La Demanderesse a donc cherché à augmenter cette quantité de bioxyde demanganèse en diminuant la quantité de l'autre constituant important de la cathode, à savoir le noir de carbone.

Ce résultat a été obtenu, suivant l'invention, en utilisant un noir de carbone spécifique présentant des propriétés de conductibilité électrique et de pouvoir d'absorption supérieures à celles des noirs de carbone normalement employés jusqu'à ce jour dans l'industrie des piles, tels que les noirs usuels d'acétylène ou de benzène. Un tel type de noir de carbone spécifique,aux performances améliorées, est maintenant connu et présent sur le marché, mais jusqu'alors son emploi n'était envisagé dans les piles que dans les mêmes conditions de mélange que celles prévues pour les noirs traditionnels moins performants.

C'est donc la caractéristique de la présente invention de prévoir dans le mélange cathodique d'un élément de pile sèche cylindrique un rapport en poids de bioxyde de manganèse au noir de carbone situé dans l'intervalle u 10 à 25, pluséleve que celui adopté dans la pratique connue, ceci grâce à l'emploi d'un noir de carbone spécifique, par exemple d'un noir d'acétylène spécifique, dont à la fois la teneur en carbonesoit supérieure à 99 %, la résistivité électrique mesurée sous une pression de 6,3. $10^5$ Pa, soit inférieure à 0,350 ohm-cm et l'indice d'absorption de phtalate de dibutyle (ou indice DBP) soit supérieur à 350 ml pour 100 g de noir. Un tel noir d'acétylène est décrit dans le brevet français No. 77 06894, noir d'acétylène qui possède une résistivité électrique mesuréesous une pression de 6,3. $10^5$ Pa, de 0,270 - 0,350 ohm-cm et un indice d'absorption DBP de 400-500 ml pour 100 g de noir.

La Demanderesse a donc mis à profit le fait que, grâce aux caractéristiques d'un tel type de noir de carbone, il était possible de remplacer une partie de la quantité de noir habituellement introduite dans les mélanges cathodiques par une part supplémentaire de bioxyde de manganèse, tout en obtenant une conductibilité dumélange et une quantité d'électrolyte absorbé équivalentes à celles des piles conventionnelles connues jusqu'alors par l'homme de l'art.

La présente invention consiste donc dans sa conception la plus large à remplacer, dans un élément de pile sèche cylindrique du couple bioxyde de manganèse-zinc à électrolyte salin le noir d'acétylène de caractéristiques conventionnelles par une quantité moindre d'un noir de carbone spécifique aux caractéristiques spéciales cumulées mentionnées ci-dessus et à compenser cette diminution de poids et de volume par une quantité accrue de bioxyde de manganèse du type synthétique (chimique et/ou électrochimique) ou du type naturellement actif.

Ainsi, pour les piles dont l'électrolyte est du type (A) et comprend donc de l'eau, du chlorure de zinc et du chlorure d'ammonium en proportion relativement elevée, le rapport en poids du bioxyde de manganèse à ce noir de carbonespécifique sera, selon l'invention, bien supérieur à celui des piles conventionnelles pour lesquelles ce rapport est généralement compris entre 3 et 8.

Par ailleurs, pour les piles dites au chlorure de zinc dont l'électrolyte (B) comprend de l'eau et uniquement du chlorure de zinc en mélange avec du chlorure d'ammonium utilisé à une teneur nettement inférieure à celle dans l'électrolyte (A) et généralement inférieure à 3% en poids dans le mélange cathodique, le rapport en poids du bioxyde de manganèse au noir de carbone spécifique sera, selon l'invention, nettement superieur à celui des piles au chlorure de zinc conventionnelles pour lesquelles ce rapport est habituellement compris entre 4 et 7.

Par rapport aux piles cylindriques conventionnelles connues, les piles selon l'invention présentent par conséquent des avantages technique et économique indéniables en ce sens que:

- soit leur durée de décharge et leur capacité dans les conditions les plus courantes d'utilisation peuvent être nettement accrues sans augmentation du prix de la cathode ou même avec légère baisse de ce prix, voire une baisse sensible lorsqu'on utilise des bioxydes de manganèse moins chers que le le noir de carbone partiellement remplacé;

- soit le prix de leur cathode peut être très nettement réduit tout en maintenant leur performance de durée de décharge et de capacité à un niveau acceptable et ce, en utilisant des bioxydes de manganèse dont le prix est très inférieur à celui du noir de carbone partiellement remplacé.

Pour mieux faire comprendre l'invention, on donnera ci-après quatre exemples d'application de l'invention, les deux premiers apportant un gain substantiel de capacité en décharge, le troisième et le quatrième apportant un gain économique certain par un abaissement notable des coûts.

Dans l'élément de pile sèche constituant le premier exemple d'application de l'invention, on utilise un mélange cathodique comportant un bioxyde de manganèse synthétique, c'est-à-dire chimique ou électrochimique, et un noir d'acétylène spécifique que nous appellerons noir N dont la teneur en carbone est supérieure à 99%, le diamètre moyen des particule est de l'ordre de 275. $10^{-10}$ m (275 Å), la surface spécifique est voisine de 100 m$^2$/g, la résistivité électrique, mesurée sous une pression de 6,3. $10^5$ Pa, est proche de 0,300 ohm-cm, l'indice filtre est de 100 et l'indice d'absorption DBP est de 400 ml pour 100 g de noir. Les hommes de l'art ont la pratique des modes de mesure permettant de connaître pour les noirs d'acétylène les valeurs des caractéristiques ainsi données.

Avantageusement, on réalise donc un mélange cathodique comportant en poids 56 à 64 %, par exemple 59 % de bioxyde de manganèse synthétique, 3,8 à 6 %, par exemple 4 % de noir d'acétylène spécifique N et on ajoute respectivement dans les meilleures conditions retenues par la Demandéresse 12 à 15 % de chlorure d'ammonium sec, par exemple 12,5%,2 à 10 % de chlorure de zinc sec, par exemple 8,5 % et 16 à 20 % d'eau, par exemple 16 % [électrolyte (A)].

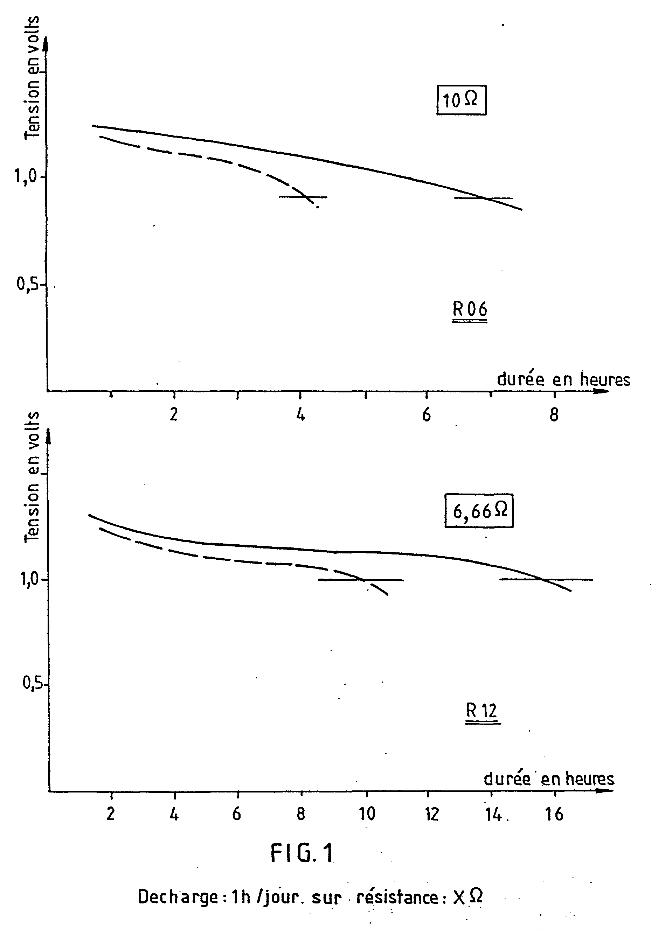

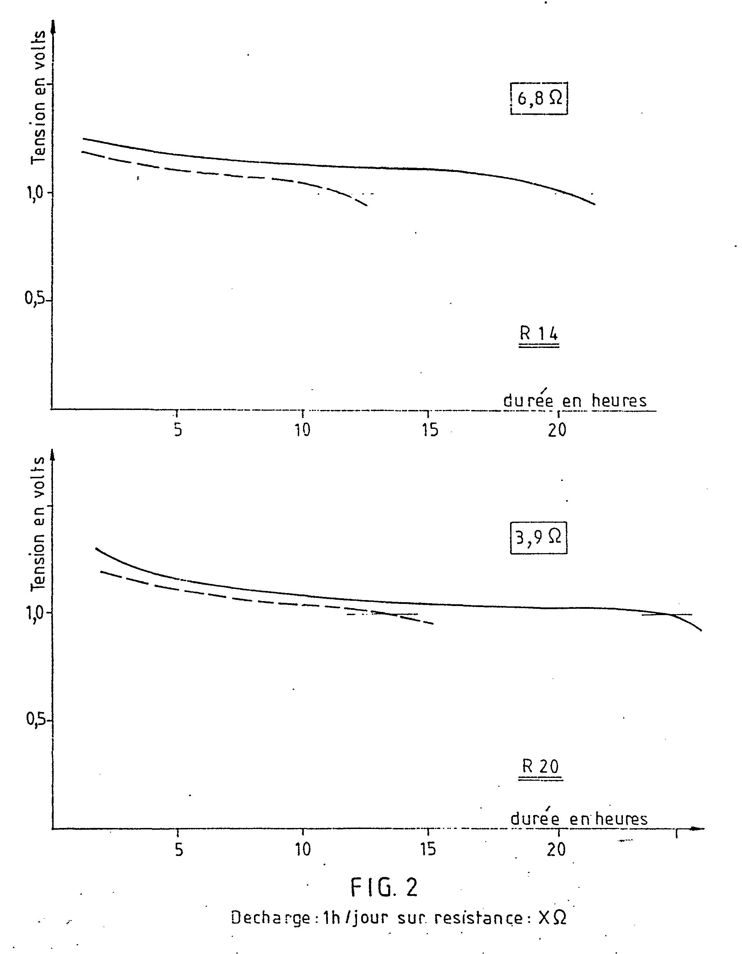

Dans un élément de pile sèche suivant cet exemple d'application, on observe de manière surprenante une augmentation de capacité, dans certains régimes d'utilisation, supérieure à celle à laquelle on pourrait normalement s'attendre du seul fait de l'augmentation de la teneur en bioxyde de manganèse. Ceci apparaît nettement sur les courbes des figures 1 et 2, courbes relatives à des éléments de module R06, R12, R14 et R20 (références des normes CEI) et qui laissent apparaître des gains de capacité de 50 à 100 % pour les piles suivant l'invention (tracé continu) par rapport aux piles conventionnelles (tracé en pointillé).

D'autre part, le prix des constituants ainsi employés dans ce premier exemple d'application de l'invention est tel que le prix de la cathode est au maximum égal et même légérement inférieur à celui des mélanges conventionnels qui comportent du bioxyde de manganèse et du noir d'acétylène usuel dans des proportions normales. Il en résulöte donc que le rapport performance/prix des piles sèches suivant cet exemple de l'invention est particulièrement favorable.

Dans l'élément de pile sèche constituant le deuxieme exemple d'application de l'invention, le mélange cathodique comprend en poids, de 60 à 69 % de bioxyde de manganèse synthétique, de 2,5 à 4,0 % de noir d'acétylènespécifique et notamment de noir N défini precedemment, de 10 à 15 % de chlorure d'ammonium sec, de 2 à 11 % de chlorue de zinc sec et de 13 à 17 % d'eau (électrolyte [A]), les mélanges cathodiques répondant à cette définition pouvant notamment avoir les compositions suivantes en % en poids:

- élément de module R 06: bioxyde de manganèse synthétique: 66,0; noir d'acétylène N: 3,0 - chlorure de zinc: 7,0; chlorure d'ammonium: 10,0; eau: 14,0.

- élément de module R14: bioxyde de manganèse synthétique: 62,5; noir d'acétylene N: 2,5; chlorure de zinc: 7,0; chlorure d'ammonium: 13,0; eau: 15,0.

Les mélanges cathodiques entrant dans le cadre de ce deuxième exemple d'application permettent un gain de capacité de l'ordre de 10 à 15 % par rapportà celle des éléments de pile de même module entrant dans le cadre du premier exemple ci-dessus, le prix de ce mélange cathodique pouvant en outre encore être réduit en comparaison de celui du mélange cathodique des éléments de pile dudit premier exemple en raison du remplacement, au sein de ce mélange, d'une quantité plus importante d'un composant de coût élevé (noir d'acétylène) par un composant de bas prix (bioxyde de manganèse).

Dans l'élément de pile séche constituant le troisiéme exemple d'application de l'invention, on utilise un mélange cathodique comportant un bioxyde de manganèse naturellement actif (que l'on extrait de certaines mines du Gabon ou de Grèce par exemple) et le noir d'acétylène spécifique N déjàdécrit.

Avantageusement, on réalise un mélange cathodique comportant en poids 54 à 64 %, par exemple 61 % de bioxyde de manganèse naturellement actif, 3,8 à 6%, par exemple 4,3 % de noir d'acétylène N, auxquels on ajoute 12 à 15 % de chlorure d'ammonium sec, par exemple 14,7 %, 2 à 10 % de chlorure de zinc sec, par exemple 5,5 % et 14 à 20 % d'eau, par exemple 14,5 % [électrolyte (A)].

Dans un élément de pile sèche suivant ce troisième exemple d'application, on utilise donc un bioxyde de manganèse naturellement actif dont le prix est très inférieur à celui des bioxydes de manganèse synthétiques. Par suite, comme selon l'invention une partie de la teneur conventionnelle en noir dont le coût est élevé est remplacée par du bioxyde de manganèse à basprix, on réalise une pile très économique dont les performances bénéficient cependant de la forte teneur en bioxyde de manganèse. On voit donc que l'invention permet dans ce cas de réaliser des piles dont le prix matières premièresest le plus bas possible pour un niveau de performance acceptable. Le rapport performance/prix est donc particulièrement favorable dans ce troisième exemple comme dans les deux premiers.

Dans l'élément de pile sèche au chlorure de zinc constituant le quatrième exemple d'application de l'invention, on utilise un mélange cathodique comportant en poids, de 49 à 62 % de bioxyde de manganèse, au moins 4 % de noir N défini précédemment, de 0 à 3 % de chlorure d'ammonium sec, de 9 à11 % de chlorure de zinc sec et de 25 à 30 % d'eau [électrolyte (B)]. Pource type d'élément dont les performances de durée de décharge sont au moins aussi bonnes que celles des piles au chlorure de zinc conventionnelles, le coût matière de la cathode peut se trouver sensiblement réduit lorsque l'on emploie certains types de bioxydes de manganèse (notamment les bioxydes de manganèse naturellement actifs mentionnés dans le cadre du troisiéme exemple d'application) dont le prix est trés inférieur à celui du noir de carbone partiellement remplacé.

Il est bien certain que la présente invention vise tous les éléments cylindriques qu'ils soient pourvus d'un séparateur constitué par une feuille de papier enduite d'une légère couche de gel électrolytique (éléments dits paper lined) ou constitué d'un gel électrolytique (éléments dits paste lined).

On pourra par ailleurs ajouter aux mélanges cathodiques qui viennent d'être décrits, les additifs classiques en matière de piles séches à électrolyte salin tels que, par exemple, l'oxyde de zinc ou le bichlorure de mercure, sans pour autant altérer en quoi que ce soit les performances des piles comportant ces mélanges cathodiques.

Quant à la fabrication des éléments de piles selon l'invention, les techniques habituelles restent parfaitement utilisables.

**Revendications**

1. Elément de pile sèche cylindrique du couple bioxyde de manganese-zinc à électrolyte salin dont la cathode est constituée d'un mélange comprenant essentiellement du bioxyde de manganèse synthétique ou naturellement actif et un noir de carbone spécifique, mélange dans lequel est absorbé un électrolyte (A) formé d'une solution composée principalement d'eau, de chlorure de zinc et de chlorure d'ammonium ou un électrolyte (B) pour élément de pile dite au chlorure de zinc, formé d'une solution composée principalement d'eau, de chlorure de zinc et eventuellement de chlorure d'ammonium a une teneur inférieure à 3 % en poids dudit mélange, élément caractérisé ence que le noir de carbone specifique utilisé possède une teneur en carbone superieure à 99 %, une résistivité électrique mesurée sous une pression de $6,3.10^5$ Pa inférieure à 0,350 ohm-cm et un indice d'absorption DBP supérieur à 350 ml pour 100 g de noir et en ce que le rapport en poids du biooxyde de manganèse au noir de carbone est située dans l'intervalle de 10 à 25.

2. Elément de pile selon la revendication 1, caractérisé en ce que le noir de carbone spécifique utilisé est un noir d'acétylène.

3. Elément de pile selon la revendication 2, caractérisé en ce que le noir d'acétylène possède une résistivité électrique mesurée sous unepression de $6,3.10^5$ Pa, de 0,270 - 0,350 ohm-cm et un indice d'absorption DBP de 400-500 ml pour 100 g de noir.

4. Elément de pile selon la revendication 3, caractérisé en ce que le noir d'acétylène possède une teneur en carbone supérieure à 99 %, un diamètre moyen des particules de l'ordre de $275.10^{-10}$m (275 Å), une surface spécifique voisine de 100 m²/g, une résistivité électrique, mesurée sousune pression de $6,3.10^5$ Pa, proche de 0,300 ohm-cm, un indice filtre de 100 et un indice d'absorption DBP de 400 ml pour 100 g de noir.

5. Elément de pile selon l'une quelconque des revendications précédentes, caractérisé en ce que le bioxyde de manganèse est du type synthétique, chimique et/ou électrochimique.

6. Elément de pile séche selon l'une quelconque des revéndications 1 à4, caractérisé en ce que le bioxyde de manganèse est du type naturellementactif.

7. Elément de pile contenant l'électrolyte (A) selon l'une quelconque des revendicationsl à 5, caractérisé en ce que le mélange cathodique a lacomposition en poids suivante: 56 à 64 % de bioxyde de manganèse synthétique; 3,8 à 5,6 % de noir d'acétylène défini à la revendication 4; 12 à15 % de chlorure d'ammonium sec; 2 a 10 % de chlorure de zinc sec; 16 à 20 % d'eau.

8. Elément de pile contenant l'électrolyte (A) selon l'une quelconque des revendications 1 à 5, caractérisé en ce que le mélange cathodique a lacomposition en poids suivante: 60 à 69 % de bioxyde de manganèse synthétique; 2,5 à 4 % de noir d'acétylène défini à la revendication 4; 10 à 15 % de chlorure d'ammonium sec; 2 à 11 % de chlorure de zinc sec; 13 à 17 % d'eau.

9. Elément de pile contenant l'électrolyte (A) selon l'une quelconque des revendications 1 à 4 et 6, caractérisé en ce que le mélange cathodiquea la composition suivante: 54 à 64 % de bioxyde de manganèse naturellement actif; 3,8 à 6,0 % de noir d'acétylène défini à la revendication 4; 12 à15 % de chlorure d'ammonium sec; 2 à 10 % de chlorure de zinc sec; 14 à 20 % d'eau.

10. Elément de pile dite au chlorure de zinc contenant l'électrolyte (B) selon l'une quelconque des revendications 1 à 6, caractérisé en ce que le mélange cathodique a la composition en poids suivante: 49 à 62 % de bioxyde de manganèse; au moins 4 % de noir d'acétylène défini à la revendication 4; 0 à 3 % de chlorure d'ammonium sec; 9 à 11 % de chlorure de zinc sec; 25à 30 % d'eau.

**Patentansprüche**

1. Zylindrisches Trockenbatterie-Element des Mangan-Zinktyps mit salzhaltigem Elektrolyt, dessen Kathode aus einem Gemisch gebildet ist, welches im wesentlichen synthetisches oder natürlich aktives Mangandioxid und einen bestimmten Ruß enthält und in welchem ein aus einer in der Hauptsache Wasser, Zinkchlorid und Ammoniumchlorid enthaltenden Lösung gebildeter Elektrolyt (A) oder ein aus einer in der Hauptsache Wasser, Zinkchlorid und gegebenenfalls Ammoniumchlorid enthaltenden Lösung gebildeter Elektrolyt (B) für Zinkchlorid-Trockenelemente zu einem Anteil von weniger als 3 Gew.% des Gemischs absorbiert sind, dadurch gekennzeichnet, daß der verwendete bestimmte Ruß einen Kohlenstoffgehalt von mehr als 99%, einenunter einem Druck von $6,3 \times 10^5$ Pa gemessenen elektrischen Widerstand von weniger als 0,350 Ohm-cm und einen DBP-Absorptionsindex von mehr als 350 ml pro 100 g Ruß hat und daß das Gewichtsverhältnis des Mangandioxids zum Ruß im Bereich zwischen 10 und 25 liegt.

2. Batterie-Element nach Anspruch 1, dadurch gekennzeichnet, daß der verwendete bestimmte Ruß ein Azetylenruß ist.

3. Batterie-Element nach Anspruch 2, dadurch gekennzeichnet, daß der Azetylenruß einen unter einem Druck von $6,3 \times 10^5$ Pa gemessenen elektrischen Widerstand von 0,270 - 0,350 Ohm-cm und einen DBP-Absorptionsindex von 400 - 500 ml pro 100 g Ruß hat.

4. Batterie-Element nach Anspruch 3, dadurch gekennzeichnet, daß der Azetylenruß einen Kohlenstoffgehalt von mehr als 99%, einen mittleren Teilchendurchmesser in der Größenordnung von $275,10^{-10}$m (275 °A), eine spezifische Oberfläche im Bereich von 100 m²/g, einen unter einem Druck von $6,3 \times 10^5$ Pa gemessenen elektrischen Widerstand im Bereich von 0,300 Ohm-cm, einen Filterindex von 100 und einen DBP-Absorptionsindex von 400 ml pro 100 g Ruß hat.

5. Batterie-Element nach einem der vorstehenden Ansprüche, dadurch gekennzeichnet, daß das Mangandioxyd vom synthetischen, chemischen und/oder elektrochemischen Typ ist.

6. Batterie-Element nach einem der Ansprüche 1 bis 4, dadurch gekennzeichnet, daß das Mangandioxid vom natürlich aktiven Typ ist.

7. Den Elektrolyten (A) enthaltendes Batterie-Element nach einem der Ansprüche 1 bis 5, dadurch gekennzeichnet, daß das Kathodengemisch, auf sein Gewicht bezogen, die folgende Zusammensetzung hat: 56 bis 64% synthetisches Mangandioxid, 3,8 bis 5,6% Azetylenruß gemäß der Definition des Anspruchs 4, 12 bis 15% trockenes Ammoniumchlorid, 2 bis 10% trockenes Zinkchlorid und 16 bis 20% Wasser.

8. Den Elektrolyten (A) enthaltendes Batterie-Element nach einem der Ansprüche 1 bis 5, dadurch gekennzeichnet, daß das Kathodengemisch, auf sein Gewicht bezogen, die folgende Zusammensetzung hat: 60 bis 69% synthetisches Mangandioxid, 2,5 bis 4% Azetylenruß gemäß der Definition des Anspruchs 4, 10 bis 15% trockenes Ammoniumchlorid, 2 bis 11% trockenes Zinkchlorid und 13 bis 17% Wasser.

9. Den Elektrolyten (A) enthaltendes Batterie-Element nach einem der Ansprüche 1 bis 4 und 6, dadurch gekennzeichnet, daß das Kathodengemisch die folgende Zusammensetzung hat: 54 bis 64% natürlich aktives Mangandioxid, 3,8 bis 6,0% Azetylenruß gemäß der Definition des Anspruchs 4, 12 bis 15% trockenes Ammoniumchlorid, 2 bis 10% trockenes Zinkchlorid und 14 bis 20% Wasser.

10. Den Elektrolyten (B) enthaltendes sogenanntes Zinkchlorid-Batterieelement nach einem der Ansprüche 1 bis 6, dadurch gekennzeichnet, daß das Kathodengemisch, bezogen auf sein Gewicht, die folgende Zusammensetzung hat:49 bis 62% Mangandioxid, wenigstens 4% Azetylenruß gemäß der Definition des Anspruchs 4, 0 bis 3% trockenes Ammoniumchlorid, 9 bis 11% trockenes Zinkchlorid und 25 bis 30% Wasser.

**Claims**

1. A manganese dioxide-zinc dry cell element with saline electrolyte whose cathode is formed from a mixture comprising essentially synthetic or naturally active manganese dioxide and a specific carbon black, in which mixture is absorbed an electrolyte (A) formed from a solution composed prin cipally of water, zinc chloride and ammonium chloride or an electrolyte (8) for a so-called zinc chloride cell element, formed from a solution composed principally of water, zinc chloride and possibly ammonium chloride in an amount less than 3 wt. % of said mixture, which element is characterized in that the specific carbon black used has a carbon content greater that 99 %, an electric resistivity measured at a pressure of $6.3 \times 10^5$ Pa less than 0.350 ohm-cm and a DBP absorption index greater than 350 mi for 100g of black and in that the weight ratio of the manganese dioxide to the carbon black is within the range of 10-25.

2. The cell element according to claim 1, characterized in that the specific carbon black used is an acetylene black.

3. The cell element according to claim 2, characterized in that the acetylene black has an electric resistivity measured at a pressure of 6.3 x $10^5$ Pa of 0.270-0.350 ohm-cm and a DBP absorption index of 400-500 ml for 100 g of black.

4. The cell element according to claim 3, characterized in that the acetylene black has a carbon content greater than 99 %, a mean diameter of the particles of the order of 275.10 m (275 A), a specific surface close to 100 $m^2$/g, an electric resistivity, measured at a pressure of 6.3 x $10^5$ Pa, close to 0.300 ohm-cm, a filter index of 100 and a DBP absorption index of 400 ml for 100g of black.

5. The cell element according to any one of the preceding claims, characterized in that the manganese dioxide is of the synthetic, chemical and/or electrochemical type.

6. The dry cell element according to any one of claims 1 to 4, characterized in that the manganese dioxide is of the naturally active type.

7. The cell element with electrolyte (A) according to any one of claims 1 to 5, characterized in that the cathode mixture has the following composition by weight: 56 to 64 % of synthetic manganese dioxide; 3.6 to 5.6 % of acetylene black defined in claim 4; 12 to 15 % of dry ammonium chloride; 2 to 10 % of dry zinc chloride; 16 to 20 % of water.

8. The cell element with electrolyte (A) according to any one of claims 1 to 5, characterized in that the cathode mixture has the following composition by weight: 60 to 69 % of synthetic manganese dioxide; 2.5 to 4 % of acetylene black defined in claim 4; 10 to 15 % of dry ammonium chloride; 2 to 11 % of dry zinc chloride; 13 to 17 % of water.

9. The cell element with electrolyte (A) according to any one of claims 1 to 4 and 6, characterized in that the cathode mixture has the following composition by weight: 54 to 64 % of naturally active manganese dioxide; 3.8 to 6 % of acetylene black defined in claim 4; 12 to 15 % of dry ammonium chloride; 2 to 10 % of dry zinc chloride; 14 to 20 % of water.

10. A so-called zinc chloride cell element containing electrolyte (8) according to any one of claims 1 to 6, characterized in that the cathode mixture has the following composition by weight: 49 to 62 % of manganese dioxide; at least 4 % of acetylene black defined in claim 4; 0 to 3 % of dry ammonium chloride; 9 to 11 % of dry zinc chloride; 25 to 30 % of water.

FIG. 1

Decharge : 1h /jour. sur résistance : XΩ

FIG. 2

Decharge : 1h / jour sur resistance : X Ω